(19) **Europäisches Patentamt / European Patent Office / Office européen des brevets**

(11) **EP 1 184 618 B1**

(12) **FASCICULE DE BREVET EUROPEEN**

(45) Date de publication et mention de la délivrance du brevet:
**10.09.2008 Bulletin 2008/37**

(51) Int Cl.:
*F21S 8/10* *(2006.01)*    *F21V 5/00* *(2006.01)*
*F21V 19/00* *(2006.01)*    *F21V 23/00* *(2006.01)*

(21) Numéro de dépôt: **01401780.0**

(22) Date de dépôt: **04.07.2001**

(54) **Feu de signalisation à structure optique simplifée et procédé de fabrication d'une telle structure**

Signalleuchte mit einem vereinfachten Aufbau und Verfahren zur Herstellung eines solchen Aufbaus

Signal light with a simplified optical structure and method to produce such a structure

(84) Etats contractants désignés:
**DE ES GB IT**

(30) Priorité: **28.08.2000 FR 0011003**

(43) Date de publication de la demande:
**06.03.2002 Bulletin 2002/10**

(73) Titulaire: **VALEO VISION**
**93012 Bobigny Cedex (FR)**

(72) Inventeurs:
• **Aynie, Jean Pierre,**
**c/o Valeo Vision**
**93012 Bobigny Cedex (FR)**
• **Gasquet, Jean Claude,**
**c/o Valeo Vision**
**93012 Bobigny Cedex (FR)**
• **Dera, Jean,**
**c/o Valeo Vision**
**93012 Bobigny Cedex (FR)**
• **Lefèvre, Ghislain,**
**c/o Valeo Vision**
**93012 Bobigny Cedex (FR)**
• **Videira, Filipe,**
**c/o Valeo Vision**
**93012 Bobigny Cedex (FR)**

(56) Documents cités:
**FR-A- 2 207 473        US-A- 4 733 335**

**EP 1 184 618 B1**

**Description**

La présente invention concerne les feux de signalisation lumineuse, notamment pour véhicules automobiles.

Elle s'applique en particulier aux feux de signalisation du type «troisième feu de stop », c'est à dire aux feux de signalisation de freinage, qui peuvent être montés à l'intérieur de l'habitacle du véhicule, contre la lunette arrière du véhicule, ou être intégrés dans des organes minces situés à l'arrière du véhicule tels que des ailerons ou des becquets aérodynamiques.

Les premiers feux de ce type présentaient l'inconvénient de fournir un éclairement non homogène, en dépit des dispositifs d'étalement de la lumière utilisés, qui consistaient généralement en des billes ou des tores intégrés dans la glace de fermeture ou dans une plaque optique du feu située en aval de la source lumineuse. Cet inconvénient, s'il est en général tolérable du point de vue de la réglementation et de la photométrie, est préjudiciable du point de vue de l'esthétique, qui prend de nos jours une importance croissante.

On connaît par exemple du document FR-A-2 614 969 un feu à source unique, dont l'éclairement est homogène. Ce feu comprend dans un boîtier un écran optique transparent ou translucide, plus communément appelé « bonnette » ou « ballon », intercalé entre une source lumineuse unique et une plaque optique essentiellement plane et s'étendant dans une direction perpendiculaire à l'axe optique du feu. La configuration géométrique particulière de la bonnette assure que la densité surfacique de flux lumineux arrivant sur la plaque est essentiellement constante sur toute la surface de cette plaque. De plus, la surface de la plaque est pourvue de stries redressant les rayons lumineux issus de la bonnette afin de transmettre à l'extérieur un faisceau situé dans l'angle solide prévu par la réglementation.

Cependant, les constructeurs automobiles désirent actuellement pouvoir utiliser des troisièmes feux de stop dont au moins une des dimensions, par exemple la largeur, soit relativement importante, et qui mettent en oeuvre une pluralité de sources lumineuses telles que des diodes électroluminescentes. Une solution à ce problème consiste, selon le document FR-A-2 776 595, à réaliser un dispositif constitué de la réunion de sous-ensembles optiques tels que décrits dans le document FR-A-2 614 969, et présentant un éclairement homogène à l'intérieur de chaque sous-ensemble.

Le document FR-A-2 776 595 prévoit d'utiliser plusieurs sources lumineuses, et, pour chaque source lumineuse, une bonnette hémisphérique répartissant la lumière de façon homogène dans un plan essentiellement perpendiculaire à la direction générale d'émission, sur un deuxième élément en forme générale de plaque apte à redresser la lumière incidente vers la direction générale d'émission, et il est prévu, à la transition entre deux éléments adjacents en forme de plaque, au moins une strie capable de redresser vers la direction générale d'émission la lumière issue de deux sources lumineuses adjacentes associées chacune à une bonnette et à un élément en forme de plaque.

Le document US-A-4 733 335 montre également un tel dispositif.

Une telle conception donne satisfaction sur le plan photométrique, mais reste perfectible, notamment en ce qui concerne sa construction mécanique. En effet, les différents composants, tels que les sources lumineuses, les bonnettes hémisphériques et les plaques, sont montés sur une structure de support. Il en résulte que la construction ou l'assemblage d'un tel feu de signalisation constitue une opération relativement délicate, qu'il est très difficile d'automatiser. De plus, de faibles variations dans les positions respectives des différents composants optiques, résultant de leurs tolérances de fabrication respectives, ont pour conséquences de fortes variations dans les qualités photométriques du faisceau résultant.

La présente invention se place dans ce contexte et elle a pour but de proposer un feu de signalisation utilisant plusieurs sources lumineuses, qui soit simple à assembler, dont les qualités photométriques soient constantes d'un feu à l'autre, et qui soit peu onéreux.

La présente invention a donc pour objet un feu de signalisation pour véhicule automobile comprenant une pluralité de sources lumineuses et des moyens de traitement optique aptes à redresser la lumière émise par les sources lumineuses pour qu'elle se propage dans une direction essentiellement parallèle à une direction générale d'émission, les moyens de traitement optique comprenant, en association avec chaque source, un premier élément apte à répartir la lumière dans un plan essentiellement perpendiculaire à la direction générale d'émission, de façon essentiellement homogène sur un deuxième élément en forme générale de plaque et apte à redresser la lumière incidente vers ladite direction générale d'émission.

Selon la présente invention, des éléments de liaison sont disposés entre des premiers éléments adjacents et entre les premiers éléments et le deuxième élément, et le premier élément, le deuxième élément et les éléments de liaison sont venus de matière ensemble et forment une structure optique d'une seule pièce.

Selon d'autres caractéristiques avantageuses et non limitatives de l'invention :

- la structure optique comporte en outre, entre les éléments de liaison et les deuxièmes éléments, des éléments de jonction qui sont d'une seule pièce avec ceux-ci,
- le deuxième élément en forme de plaque comporte tout le long de l'un de ses bords longitudinaux une nervure de rigidification,
- la structure optique comporte, entre le deuxième élément et les premiers éléments ou les éléments de liaison, un plateau continu qui est d'une seule pièce avec ces éléments,
- la structure optique comporte des éléments de fixation d'un circuit imprimé,
- le circuit imprimé porte les sources lumineuses,
- les sources lumineuses sont des diodes électroluminescentes,
- les sources lumineuses sont essentiellement alignées,
- la structure optique comporte des moyens de retenue d'un connecteur associé au circuit imprimé, ces moyens e retenue étant d'une seule pièce avec la structure optique,
- la structure optique comporte des moyens de fixation dans un boîtier, qui sont d'une seule pièce avec la structure optique, et
- le premier élément répartit la lumière sur le deuxième élément en tenant compte des variations des coefficients de transmission des premier et deuxième éléments, et de la courbe indicatrice d'émission de la source lumineuse, pour obtenir un éclairement en sortie du deuxième élément qui réponde à une loi prédéterminée.

La présente invention a également pour objet un procédé de fabrication d'un feu de signalisation pour véhicule automobile, le feu comprenant au moins une source lumineuse et des moyens de traitement optique aptes à redresser la lumière émise par les sources lumineuses pour qu'elle se propage dans une direction essentiellement parallèle à une direction générale d'émission, les moyens de traitement optique comprenant, en association avec chaque source, un premier élément apte à répartir la lumière dans un plan essentiellement perpendiculaire à la direction générale d'émission, de façon essentiellement homogène sur un deuxième élément en forme générale de plaque et apte à redresser la lumière incidente vers ladite direction générale d'émission, le procédé comprenant les étapes consistant à :

- établir une loi d'évolution des coefficients de transmission des moyens de traitement optique en fonction d'au moins une coordonnée sur la plaque dans une direction perpendiculaire à la direction générale d'émission,
- établir une loi souhaitée d'évolution de l'éclairement du feu en fonction de la coordonnée sur la plaque.

Selon la présente invention, le procédé comprend en outre les étapes consistant à :

- déterminer la courbe indicatrice d'émission de la source lumineuse et la loi d'émission correspondante,
- établir par combinaison de ces lois une relation entre l'orientation d'un rayon issu de la source lumineuse et incident sur le deuxième élément et la coordonnée sur la plaque,
- définir la géométrie des moyens de traitement optique en fonction de ladite relation,
- fabriquer en utilisant ladite géométrie un moule pour au moins le premier élément,
- mouler le premier élément à l'aide dudit moule.

D'autres buts, caractéristiques et avantages de la présente invention ressortiront clairement de la description qui va maintenant être faite d'un exemple de réalisation donné à titre non limitatif en référence aux dessins annexés sur lesquels :

- La Figure 1 représente une vue en perspective de trois quarts arrière d'un feu de signalisation réalisé selon la présente invention ;
- La Figure 2 représente une vue en perspective de trois quarts avant du feu de signalisation de la Figure 1 ;
- La Figure 3 représente une vue de dessus du feu de la Figure 1 ;
- La Figure 4 représente une vue analogue à celle de la Figure 3, le feu étant dépourvu de circuit électrique ;
- La Figure 5 représente une vue par l'arrière du feu de la Figure 4 ;
- La Figure 6 représente une vue de dessus à plus grande échelle d'une extrémité du feu de la Figure 3 ;
- La Figure 7 représente une vue de dessus d'une variante de réalisation du feu des Figures 1 à 6 ;
- La Figure 8 représente une vue de côté du feu des Figures 1 à 6 ou de la Figure 7, par exemple vue dans la direction VIII des Figures 5 et 7 ;
- La Figure 9 représente une vue en coupe selon la ligne IX-IX de la Figure 3 ;
- La Figure 10 représente une vue en coupe selon la ligne X-X de la Figure 3 ;
- La Figure 11 représente une vue en coupe selon la ligne XI-XI de la Figure 3 ;
- La Figure 12 représente une vue en coupe selon la ligne XII-XII de la Figure 7 ;
- La Figure 13 représente une vue en coupe selon la ligne XIII-XIII de la Figure 7 ;
- La Figure 14 représente une vue en coupe schématique d'une diode électroluminescente, et
- La Figure 15 représente un diagramme d'émission d'une diode électroluminescente.

Par convention, on définit trois directions orthogonales X, Y et Z qui seront utilisées dans la description et sur les Figures, X étant la direction générale d'émission du faisceau lumineux par le feu, sensiblement parallèle à l'axe longitudinal du véhicule, Y étant la direction horizontale perpendiculaire à X et Z la direction verticale.

Sur les Figures, on a représenté un feu de signalisation regroupant plusieurs sources lumineuses telles que des diodes électroluminescentes 10 coopérant chacune avec une bonnette 12 formant une calotte sphérique pour répartir les rayons lumineux émis par la diode 10 et éclairer une plaque 14 transparente.

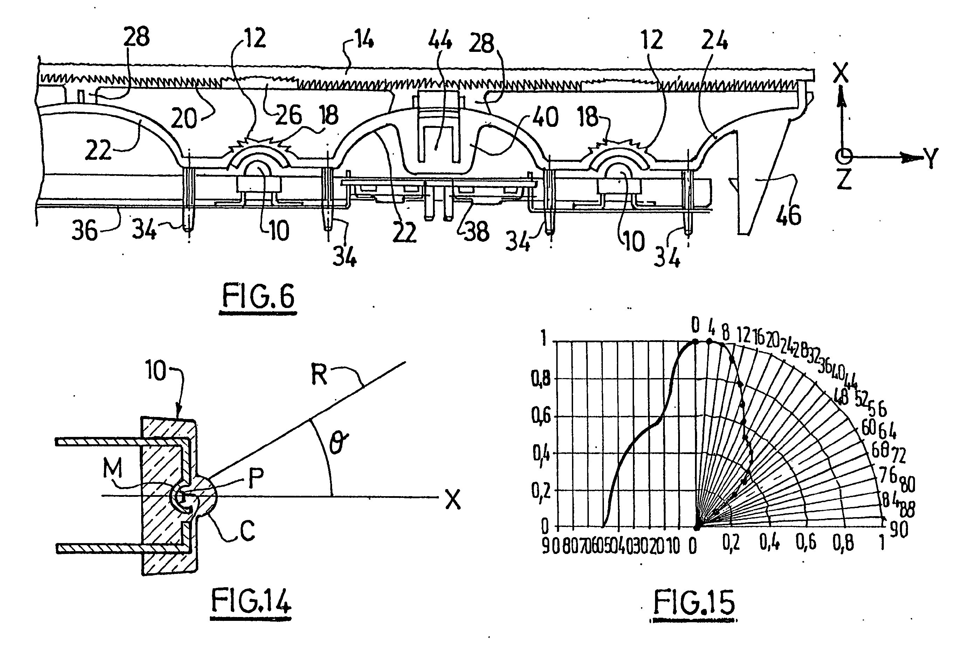

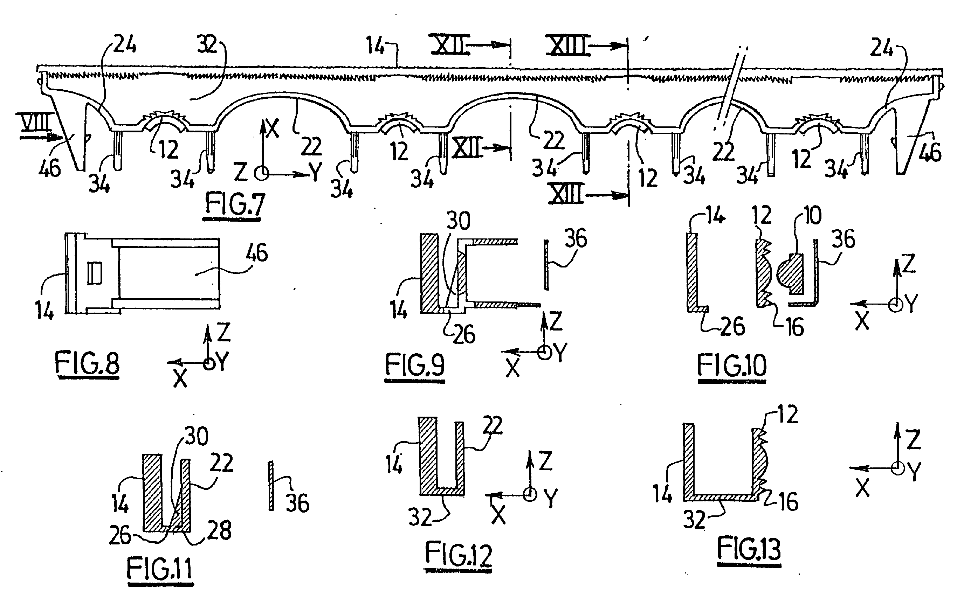

De façon plus précise, la bonnette 12 comporte sur sa face interne, tournée vers la diode 10, des stries 16, essentiellement horizontales (Figure 10), et sur sa face externe des stries 18, essentiellement verticales (Figure 6). De même, la plaque 14 comporte sur sa face interne, faisant face à la bonnette 12, des stries 20, essentiellement verticales. De manière connue, par exemple par les documents précités, les stries 16, 18 et 20 assurent que l'éclairement issu de la plaque 14 est homogène selon les directions Y et Z.

Cet ensemble est destiné à être disposé dans un boîtier (non représenté) fermé par une glace de fermeture (non représentée). La plaque 14 peut assurer simultanément le rôle de glace de fermeture si elle est pourvue sur sa face externe, c'est à dire la face la plus éloignée des diodes électroluminescentes, de moyens de diffusion de la lumière qui la traverse tels que des perles ou des tores formés sur cette face externe.

Dans le mode de réalisation représenté sur les Figures, le feu de signalisation comporte quatre sources lumineuses 10, et par conséquent quatre bonnettes 12.

Conformément à un aspect de la présente invention, les bonnettes 12 sont venues de matière les unes avec les autres et avec la plaque 14. On peut à cet effet prévoir par exemple que deux bonnettes adjacentes soient reliées entre elles par des parois intermédiaires 22, et que les bonnettes d'extrémité soient reliées aux extrémités de la plaque 14 par des parois d'extrémité 24. De préférence, les bonnettes 12, la plaque 14, et les parois 22 et 24 ont la même dimension dans la direction Z. Les parois 22 et 24 peuvent avoir une forme quelconque, par exemple rectiligne ou courbe comme on l'a représenté sur les Figures, pourvu qu'elles ne se trouvent pas sur le trajet des rayons lumineux émergeant des bonnettes 12 et incidents sur la plaque 14.

On obtient ainsi en une seule opération, par exemple par moulage, une structure optique complète comportant les composants optiques essentiels du feu de signalisation.

Une telle conception présente de nombreux avantages, dont tout d'abord une très grande facilité d'assemblage du feu de signalisation. En effet, il suffit simplement de placer cette structure optique dans son boîtier, plutôt que d'assembler dans ce boîtier les bonnettes et les plaques individuelles, pour obtenir la structure optique essentielle d'un feu de signalisation pratiquement complet.

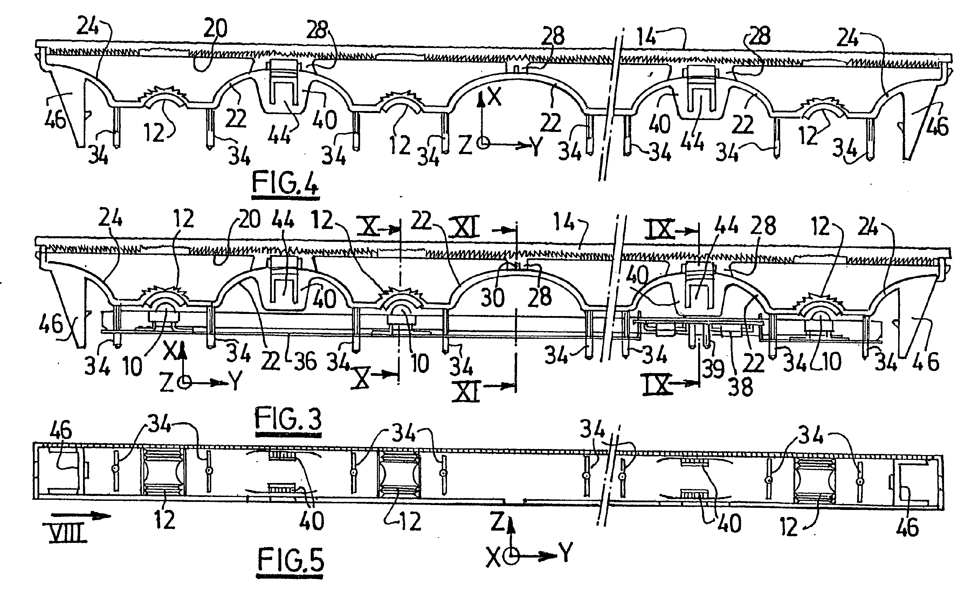

De manière à améliorer la rigidité de cette structure optique, on peut prévoir des renforts en différents endroits de la structure. On peut par exemple prévoir, ainsi qu'on l'a représenté sur les Figures 3, 6, 9 et 10, de rigidifier la plaque 14 en formant, tout le long de l'un de ses bords longitudinaux, une nervure 26 s'étendant dans la direction X, de préférence vers l'arrière, c'est à dire vers les bonnettes 12. La plaque 14 présente ainsi en section la forme d'une cornière, ce qui lui donne une plus grande raideur.

On peut également prévoir de relier la plaque 14 aux parois intermédiaires 22, à l'aide de pattes 28, avantageusement situées dans le prolongement de la nervure 26, ainsi qu'on l'a représenté sur les Figures 3, 4 et 6. De cette manière, non seulement la rigidité de la structure optique se trouve améliorée, mais aussi la position relative des bonnettes 12 et de la plaque 14 est fixée de façon permanente. Une équerre 30 peut également être formée entre la patte 28 et la plaque 14, ou de préférence entre la patte 28 et la paroi intermédiaire 22, ainsi qu'on l'a représenté en particulier sur les Figures 9 et 11, de manière à ne pas interférer avec les rayons lumineux issus des bonnettes 12 et incidents sur la plaque 14. Ces équerres 30, et par conséquent les pattes 28 sur qui elles sont éventuellement formées, seront avantageusement situées à égale distance de deux bonnettes adjacentes.

Selon une variante de réalisation représentée sur les Figures 7, 12 et 13, on peut également prévoir de relier la plaque 14 aux bonnettes 12 et aux parois 22 et 24 par un plateau continu 32, constituant le prolongement de la nervure 26 jusqu'aux parois 22 et 24 et aux bonnettes 12. Selon une telle réalisation, la structure optique présente en section une forme de U, l'espacement entre les branches du U étant variable en fonction de l'endroit où est effectuée la section. Cette structure présente ainsi une très grande rigidité. Des pattes peuvent là aussi être formées entre les parois intermédiaires 22 et le plateau 32.

Quel que soit le mode de réalisation choisi pour la structure optique, on pourra avantageusement prévoir de réaliser cette structure de sorte qu'on puisse y fixer facilement les sources lumineuses, en l'occurrence les diodes électroluminescentes 10. Ceci peut être obtenu simplement selon la présente invention, en prévoyant de former des pions ou des picots 34, s'étendant vers l'arrière dans la direction X. Ces pions 34 sont adaptés pour coopérer avec des ouvertures formées dans un circuit imprimé 36, sur lequel sont avantageusement soudées les diodes électroluminescentes 10, ainsi qu'un circuit d'alimentation 38 de ces diodes, formé des composants électroniques habituels.

De cette manière, l'assemblage du feu de signalisation se trouve encore simplifié, puisqu'il suffit de fixer le circuit imprimé 36, pré-assemblé par ailleurs, sur les pions 34 pour obtenir un ensemble complet de génération et d'émission de lumière, qu'il suffit alors de placer dans un boîtier pour obtenir un feu de signalisation complet. Une telle solution présente l'avantage supplémentaire qu'il est ainsi possible de disposer avec précision les diodes électroluminescentes à une distance prédéterminée des bonnettes 12 pour obtenir les performances photométriques optimales du feu de signalisation ainsi assemblé de manière simple et fiable.

Le circuit imprimé 36 peut comprendre des cosses 39 (Figure 3) pour établir la liaison avec une alimentation en courant électrique, par exemple par soudure de fils sur ces cosses. Ces fils sont alors soudés par une de leurs extrémités sur les cosses 39 avant l'installation du circuit imprimé 36 sur la structure optique, et comprennent à leur autre extrémité un connecteur. De manière à éviter d'obtenir un feu de signalisation duquel sort un fil électrique plus ou moins long, on pourra préférer que ce feu de signalisation dispose lui-même d'un connecteur.

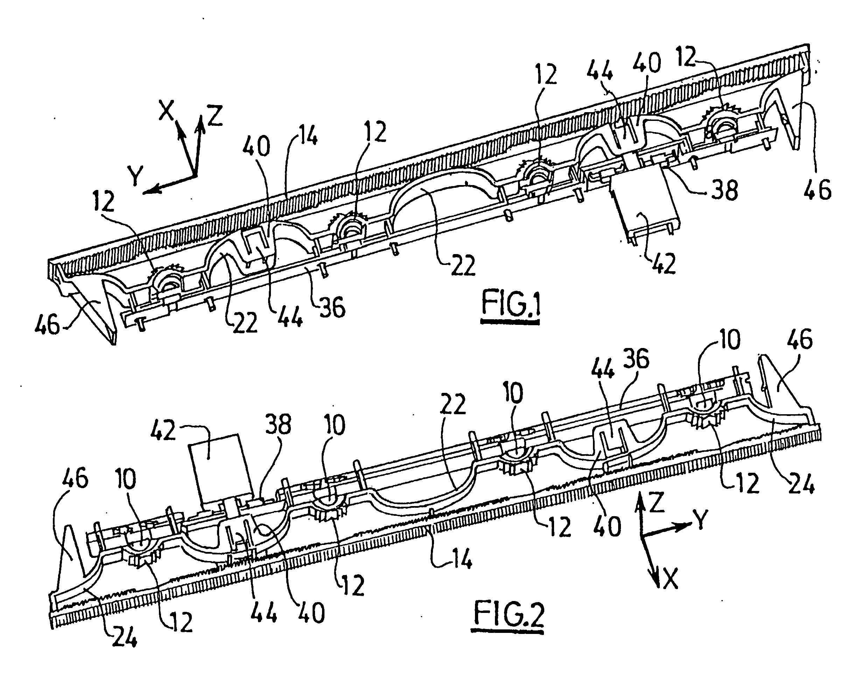

Ceci peut être réalisé simplement, en formant sur la structure optique une paire d'oreilles 40 destinées à recevoir, par exemple par encliquetage, un connecteur 42 (Figures 1 et 2), par exemple un connecteur femelle, solidaire du circuit imprimé 36. Les oreilles 40 d'une paire sont de préférence formées à partir des bords supérieur et inférieur de la paroi intermédiaire 22, en étant d'une seule pièce avec elle. Les oreilles 40 peuvent être formées avec une partie élastique 44, destinée à coopérer avec des languettes d'encliquetage portées par le connecteur 42. Ainsi, lors de l'assemblage, il suffit de placer le circuit imprimé 36 de telle manière que ses ouvertures coopèrent avec les pions 34, et que les languettes du connecteur 42 viennent s'encliqueter entre les oreilles 40.

De préférence, la patte 28 associée à la paroi intermédiaire 22 sur laquelle la paire d'oreilles 40 est formée est renforcée, pour éviter que l'installation du circuit imprimé 36 sur la structure optique ou le branchement d'un connecteur mâle (non représenté) sur le connecteur femelle 42 ne vienne exercer des contraintes importantes sur la structure optique, contraintes qui pourraient résulter en une rupture de cette structure.

La structure optique peut encore être formée avec des ergots 46 destinés à faciliter l'installation de la structure optique dans son boîtier, et à en assurer le maintien dans celui-ci. Comme on l'a représenté sur les Figures, les ergots 46 peuvent être formés aux extrémités de la structure optique, par exemple sur les parois d'extrémité 24, en étant d'une seule pièce avec celles-ci. Comme on le voit mieux sur les Figures 1 et 5, les ergots 46 ont une section en forme de U, dont les branches ont la forme de triangles. Toute autre forme d'ergot pourra être choisie, en fonction de la configuration du boîtier destiné à recevoir une telle structure optique.

On a donc réalisé une structure optique qui comporte les bonnettes 12 reliées par des parois intermédiaires 22, la plaque 14 reliée aux bonnettes situées aux extrémités par des parois 24, des pions 34 destinés à recevoir un circuit imprimé 36, des oreilles 40 de fixation d'un connecteur et des ergots 46 de fixation, tous ces éléments étant d'une seule pièce, et donc obtenus en une seule opération.

L'assemblage d'un feu de signalisation à l'aide d'une telle structure est particulièrement simple. Il suffit en effet de fixer le circuit imprimé 36, assemblé par ailleurs, sur les pions 34, en faisant coopérer les languettes du connecteur 42, si le circuit imprimé 36 en est pourvu, avec les parties élastiques 44 des oreilles 40. On obtient ainsi un ensemble complet de génération et d'émission de lumière, qu'on peut alors disposer grâce aux ergots 46 dans un boîtier, qu'il suffit de refermer pour obtenir un feu de signalisation complet. Une telle suite d'opérations peut facilement être automatisée, ce qui contribue encore à diminuer le coût du feu de signalisation ainsi obtenu.

Un des avantages d'une réalisation d'une structure optique en une seule pièce telle qu'on vient de la décrire réside dans le fait que les distances relatives entre les différents composants optiques de cette structure sont fixées par construction, et elles sont invariables lors de la manipulation et le stockage de cette structure, l'assemblage du feu de signalisation, la manipulation, le stockage du feu, l'installation du feu sur un véhicule automobile, et au cours de l'utilisation de ce feu.

Un autre avantage procuré par cette conception réside dans le fait que, de cette manière, on est toujours assuré que les indices de réfraction des bonnettes 12 et de la plaque 14 seront toujours identiques, puisque ces composants sont réalisés dans exactement la même matière.

Ces deux dernières caractéristiques ont comme résultat que les performances photométriques d'un feu de signalisation assemblé à l'aide d'une telle structure optique pourront être déterminées avec une grande précision, puisqu'elles seront parfaitement reproductibles. De telles performances pourront même être optimisées grâce à l'utilisation de diodes électroluminescentes.

En effet, pour un feu de signalisation, on fixe une loi souhaitée de l'éclairement sur la plaque 14, en direction horizontale, qui détermine, dans la plage éclairante du feu, une évolution de l'éclairement effectif en sortie de la plaque 14 en fonction de l'abscisse y d'un point courant de cette plaque dans la direction Y. Cette loi est notée $k_1(\theta)$, et il est en particulier désiré que le niveau d'éclairement E soit essentiellement constant sur toute l'étendue horizontale de la plage éclairante du feu de signalisation, et par conséquent sur toute l'étendue horizontale de chaque partie de la plaque 14 associée à une seule bonnette 12, soit

$$k_1(\theta) = E(\theta) = 1$$

D'autre part, comme on l'a représenté sur la Figure 14, les diodes électroluminescentes sont des systèmes optiques constitués d'une puce P génératrice de flux lumineux, d'un miroir M pour collecter et rediriger le flux émis vers l'arrière, et d'un condenseur C hémisphérique pour concentrer le flux émis vers l'avant. Avec une telle construction, la diode émet un faisceau lumineux limité angulairement et dont le maximum d'intensité est situé dans l'axe X de cette diode, selon une indicatrice d'émission représentée sur la Figure 15.

La moitié gauche de la Figure 15 représente la demi-indicatrice d'émission de la diode 10, en portant en abscisses les valeurs de l'ouverture angulaire et en ordonnées les valeurs de l'intensité relative du faisceau lumineux. La moitié droite de la Figure 15 représente un demi lobe d'émission en coordonnées polaires, en portant sur les rayons les valeurs de l'intensité relative du faisceau lumineux, et en coordonnées angulaires les valeurs de l'ouverture angulaire du faisceau lumineux. Les valeurs indiquées, exprimées en candelas par degrés, correspondent à une section horizontale du faisceau sur un écran perpendiculaire à l'axe X et à une distance déterminée de la diode. La trace du faisceau sur cet écran forme une tache circulaire de révolution.

Dans l'exemple représenté sur la Figure 15, on voit que la quasi-totalité du flux lumineux émis par la diode est compris dans un angle solide de demi-angle au sommet égal à environ 60°. La dimension de la bonnette dans la direction Z étant donnée, on pourra facilement déterminer sa position dans la direction X par rapport à la diode 10 pour qu'elle recueille la totalité de ce flux lumineux.

Pour une diode électroluminescente 10 donnée, on peut déterminer la courbe indicatrice d'émission, représentée sur la Figure 15, et qui peut être assimilée à une fonction polynomiale $I(\theta)$ de degré 12, de la forme :

$$I(\theta) = a_0 + a_2\theta^2 + a_4\theta^4 + a_6\theta^6 + a_8\theta^8 + a_{10}\theta^{10} + a_{12}\theta^{12}$$

où $\theta$ est l'angle que fait un rayon émis par la diode électroluminescente 10 avec la direction X, comme on l'a indiqué sur la Figure 14. Il en découle une loi notée $k_2(\theta)$ donnant l'évolution de l'intensité du lobe d'émission de la diode, telle que

$$k_2(\theta) = \frac{1}{I(\theta)}$$

représente la fonction de répartition dans le calcul de l'intensité pour l'angle $\theta$ telle que :

$$E(\theta) = k_2(\theta) * I(\theta) = 1$$

On a vu par ailleurs que la bonnette 12 est formée sur sa face intérieure avec des stries 16, de forme généralement circulaires, et dont la forme en section verticale correspond à celle d'une lentille cylindrique de Fresnel. Ces stries 16 sont aptes à redresser les rayons lumineux émis par la diode électroluminescente 10 vers le haut et vers le bas de telle sorte qu'ils se propagent dans une direction généralement horizontale. Ces stries n'ont pas d'influence sur la répartition horizontale des rayons lumineux. Par contre, les stries 18 formées sur la surface extérieure de la bonnette 12 assurent une répartition horizontale des rayons lumineux en direction de la plaque 14, de telle sorte que l'éclairement du feu dans la direction Y tout au long dé la plage éclairante soit constant. Enfin, les stries 20 formées sur la plaque 14 dévient les rayons lumineux issus de la bonnette 12 pour les diriger dans une direction sensiblement parallèle à la direction X.

Il en résulte une loi, notée $k_3(\theta)$, donnant l'évolution des coefficients de transmission de ce système en fonction de l'angle $\theta$ que fait un rayon émis par la diode électroluminescente 10 avec la direction X.

Conformément à un deuxième aspect de l'invention, on tient compte de l'indicatrice d'émission de la diode électroluminescente 10 utilisée, des propriétés de transmission lumineuse et de l'évolution désirée de l'éclairement pour réaliser la loi de répartition horizontale de la lumière par les stries 18 sur la surface extérieure de la bonnette 12, selon l'équation :

$$y = k_1(\theta) * k_2(\theta) * k_3(\vartheta) * \theta$$

où y est l'abscisse d'un point courant de la plaque 14 dans la direction Y et $\theta$ l'angle que fait un rayon émis par la diode électroluminescente 10 avec la direction X.

Les fonctions de répartition $F(\theta)$ prises en compte dans le calcul des stries 18 formées sur la surface extérieure de la bonnette 12 sont définies et optimisées en fonction de l'indicatrice d'émission $I(\theta)$ de la diode électroluminescente utilisée, chaque type de diode électroluminescente ayant une indicatrice d'émission $I(\theta)$ particulière.

Connaissant l'indicatrice d'émission de la diode électroluminescente utilisée, on pourra alors, selon la présente invention, déterminer la loi de répartition horizontale de la lumière par les stries 18 de la surface extérieure de la bonnette 12, c'est à dire, pour chaque valeur de $\theta$, l'abscisse y que doit atteindre, sur la plaque 14, chaque rayon lumineux émis par la diode électroluminescente 10 particulière, une fois dévié par la bonnette 12. On peut ainsi déterminer par le calcul la forme des stries 18 pour obtenir ce résultat.

La présente invention a également pour objet un procédé de fabrication d'un feu de signalisation tel qu'il vient d'être décrit. Un tel procédé comprend les étapes consistant à :

- établir une loi d'évolution $k_3(\theta)$ des coefficients de transmission des moyens de traitement optique 16, 18, 20 en fonction d'au moins une coordonnée y sur la plaque 14 dans une direction Y perpendiculaire à la direction générale d'émission X
- établir une loi souhaitée $k_1(\theta)$ d'évolution de l'éclairement du feu en fonction de la coordonnée y sur la plaque 14,

Selon la présente invention, le procédé comprend en outre les étapes consistant à :

- déterminer la courbe $k_2(\theta)$ indicatrice d'émission de la source lumineuse 10 et la loi d'émission $I(\theta)$ correspondante,
- établir par combinaison de ces lois une relation entre l'orientation $\theta$ d'un rayon issu de la source lumineuse 10 et incident sur le deuxième élément 14, 20 et la coordonnée y sur la plaque 14,
- définir la géométrie des moyens de traitement optique 16, 18, 20 en fonction de ladite relation,
- fabriquer en utilisant ladite géométrie un moule pour au moins le premier élément 12, 6, 18,
- mouler le premier élément 12, 16, 18 à l'aide dudit moule.

On a vu plus haut que ladite relation est de la forme :

$$y = k_1(\theta) * k_2(\theta) * k_3(\vartheta) * \theta$$

où y est l'abscisse d'un point courant de la plaque (14) dans la direction Y,

$k_1(\theta)$ est la loi souhaitée d'évolution de l'éclairement du feu en fonction de la coordonnée (y) sur la plaque (14),
$k_2(\theta)$ est la loi d'émission ($I(\theta)$) de la source lumineuse,
$k_3(\theta)$ est la loi d'évolution des coefficients de transmission, et
$\theta$ est un angle que fait un rayon lumineux issu de la source lumineuse (10) par rapport à la direction générale d'émission (X).

Encore un autre avantage de la présente invention réside dans le fait que, de cette manière, il est possible d'utiliser dans les meilleures conditions, un nombre réduit de diodes électroluminescentes, par exemple au nombre de trois ou quatre, alors que les feux de signalisation de l'art antérieur en utilisaient un nombre largement supérieur. En effet, les diodes électroluminescentes doivent classiquement être regroupées électriquement en série par un multiple de trois ou quatre diodes, ce qui a amené à des montages comprenant jusqu'à soixante quatre diodes. De tels montages, outre leur complexité et leur coût élevé, présentent comme inconvénient une température de fonctionnement relativement élevée, nuisible au rendement des diodes.

Grâce à la conception de la structure optique selon la présente invention, il est possible de n'utiliser qu'un nombre minimal de diodes électroluminescentes. Un tel montage de trois ou quatre diodes en série est pratiquement insensible aux variations de tension d'alimentation, et pratiquement toute l'énergie électrique consommée est transformée en flux lumineux, et très peu en chaleur par effet Joule.

La structure optique permet de réaliser un feu de signalisation possédant une grande largeur dans la direction Y, par exemple de l'ordre de 300 mm, une hauteur relativement faible dans la direction Z, par exemple de l'ordre de 10 mm, et une profondeur faible dans la direction X, par exemple de l'ordre de 30 mm, les diodes étant espacées d'environ 75 mm.

Le fait d'espacer les diodes permet de limiter l'échauffement interne du boîtier à une valeur minimale, ce qui permet d'utiliser les diodes dans leur plage de fonctionnement optimale. En effet, le rendement d'une diode électroluminescente, caractérisant la quantité de lumière émise par rapport à l'énergie électrique absorbée, se dégrade à mesure que la température de la puce émettrice de lumière s'élève. L'invention, en éloignant les diodes les unes des autres, permet de faire fonctionner les diodes de manière optimale, les effets d'échauffement mutuel entre deux diodes contiguës étant réduits dans une large mesure. C'est ainsi qu'on pourra utiliser des diodes émettant un flux lumineux important sans qu'elles subissent un phénomène d'auto-échauffement et de les alimenter à pleine puissance à leur tension nominale, sans nuire à leur durée de vie.

On pourra par exemple utiliser des diodes électroluminescentes connues sous le nom de SNAPLED ™, vendues dans le commerce par la Société LUMILED. Ces diodes seront alors avantageusement agrafées et serties sur un circuit métallique. Un tel circuit métallique présente l'avantage supplémentaire de drainer l'énergie thermique engendrée par les diodes.

On peut également utiliser comme diodes électroluminescentes des composants à montage en surface (CMS), en les disposant sur un circuit traditionnel en technologie report en surface, et en collant des plaques métalliques sur le circuit pour agir comme des drains ou des radiateurs thermiques.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que la plaque de sortie pourra être rectiligne ou posséder un rayon de courbure, fixe ou variable.

**Revendications**

1. Feu de signalisation pour véhicule automobile comprenant une pluralité de sources lumineuses (10) et des moyens de traitement optique (16, 18, 20) aptes à redresser la lumière émise par les sources lumineuses (10) pour qu'elle se propage dans une direction essentiellement parallèle à une direction générale d'émission (X), les moyens de traitement optique (16, 18, 20) comprenant, en association avec chaque source (10), un premier élément (12, 16, 18) apte à répartir la lumière dans un plan (YZ) essentiellement perpendiculaire à la direction générale d'émission (X), de façon essentiellement homogène sur un deuxième élément (14, 20) en forme générale de plaque et apte à redresser la lumière incidente vers ladite direction générale d'émission (X), **caractérisé en ce que** des éléments de liaison (22, 24) sont disposés entre des premiers éléments (12) adjacents et entre les premiers éléments (12) et le deuxième élément (14), et **en ce que** le premier élément (12), le deuxième élément (14) et les éléments de liaison (22, 24) sont venus de matière ensemble et forment une structure optique d'une seule pièce.

2. Feu de signalisation selon la revendication 1, **caractérisé en ce que** la structure optique comporte en outre, entre les éléments de liaison (22) et les deuxièmes éléments (14), des éléments de jonction (28) qui sont d'une seule pièce avec ceux-ci.

3. Feu de signalisation selon la revendication 1, **caractérisé en ce que** le deuxième élément en forme de plaque (14) comporte tout le long de l'un de ses bords longitudinaux une nervure (26) de rigidification.

4. Feu de signalisation selon la revendication 1, **caractérisé en ce que** la structure optique comporte, entre le deuxième élément (14) et les premiers éléments (12) ou les éléments de liaison (22, 24), un plateau continu (32) qui est d'une seule pièce avec ces éléments (12, 14, 22, 24).

5. Feu de signalisation selon la revendication 1, **caractérisé en ce que** la structure optique comporte des éléments de fixation (34) d'un circuit imprimé (36).

6. Feu de signalisation selon la revendication 5, **caractérisé en ce que** le circuit imprimé (36) porte les sources lumineuses (10).

7. Feu de signalisation selon la revendication 6, **caractérisé en ce que** les sources lumineuses (10) sont des diodes électroluminescentes.

8. Feu de signalisation selon la revendication 7, **caractérisé en ce que** les sources lumineuses sont essentiellement alignées.

9. Feu de signalisation selon la revendication 5, **caractérisé en ce que** la structure optique comporte des moyens de retenue (40, 44) d'un connecteur (42) associé au circuit imprimé (36), ces moyens e retenue étant d'une seule pièce avec la structure optique.

10. Feu de signalisation selon la revendication 1, **caractérisé en ce que** la structure optique comporte des moyens de fixation (46) dans un boîtier, qui sont d'une seule pièce avec la structure optique.

**11.** Feu de signalisation selon la revendication 1, **caractérisé en ce que** le premier élément (12, 16, 18) répartit la lumière sur le deuxième élément en tenant compte des variations ($k_3(\theta)$) des coefficients de transmission des premier (12) et deuxième (14) éléments, et de la courbe indicatrice d'émission ($k_2(\theta)$) de la source lumineuse (10), pour obtenir un éclairement en sortie du deuxième élément (14) qui réponde à une loi prédéterminée ($k_1(\theta)$).

**Claims**

**1.** Signalling light for a motor vehicle, comprising a plurality of sources of light (10) and optical processing means (16, 18, 20) which can rectify the light emitted by the sources of light (10) so that it is propagated in a direction which is substantially parallel to a general direction of emission (X), the optical processing means (16, 18, 20) comprising, in association with each source (10), a first element (12, 16, 18) which can distribute the light on a plane (YZ) which is substantially perpendicular to the general direction of emission (X), in a manner which is substantially homogeneous, onto a second element (14, 20) which is in the general form of a plate, and can rectify the incident light towards the said general direction of emission (X), **characterised in that** connection elements (22, 24) are disposed between first adjacent elements (12), and between the first elements (12) and the second element (14), and **in that** the first element (12), the second element (14) and the connection elements (22, 24) are produced integrally with one another, and form an optical structure in a single piece.

**2.** Signalling light according to claim 1, **characterised in that** the optical structure additionally comprises, between the connection elements (22) and the second elements (14), joining elements (28) which are integral with the latter.

**3.** Signalling light according to claim 1, **characterised in that** the second element in the form of a plate (14) comprises a strengthening rib (26) along one of its longitudinal edges.

**4.** Signalling light according to claim 1, **characterised in that** the optical structure comprises, between the second element (14) and the first elements (12) or connection elements (22, 24), a continuous plate (32) which is integral with these elements (12, 14, 22, 24).

**5.** Signalling light according to claim 1, **characterised in that** the optical structure comprises securing elements (34) of a printed circuit (36).

**6.** Signalling light according to claim 5, **characterised in that** the printed circuit (36) supports the sources of light (10).

**7.** Signalling light according to claim 6 **characterised in that** the sources of light (10) are electroluminescent diodes.

**8.** Signalling light according to claim 7 **characterised in that** the sources of light are substantially aligned.

**9.** Signalling light according to claim 5, **characterised in that** the optical structure comprises means (40, 44) for retention of a connector (42) associated with the printed circuit (36), these retention means being integral with the optical structure.

**10.** Signalling light according to claim 1, **characterised in that** the optical structure comprises securing means (46) in a case, which are integral with the optical structure.

**11.** Signalling light according to claim 1, **characterised in that** the first element (12, 16, 18) distributes light on the second element, taking into account variations ($k_3(\theta)$) of the coefficients of transmission of the first (12) and second (14) elements, and of the emission indicator curve ($k_2(\theta)$) of the source of light (10), in order to obtain lighting at the output from the second element (14) which conforms with a predetermined law ($k_1(\theta)$).

**Patentansprüche**

**1.** Kraftfahrzeugsignalleuchte mit einer Vielzahl von Lichtquellen (10) und optischen Verarbeitungsmitteln (16, 18, 20), die das von den Lichtquellen (10) emittierte Licht so auszurichten vermögen, dass sich dieses im Wesentlichen parallel zu einer allgemeinen Lichtabgaberichtung (X) ausbreitet, wobei die optischen Verarbeitungsmittel (16, 18, 20) jeder Lichtquelle (10) zugeordnet ein erstes Element (12, 16, 18) umfassen, welches das Licht in einer Ebene (YZ) im Wesentlichen quer zur allgemeinen Lichtabgaberichtung (X) im Wesentlichen gleichmäßig auf ein zweites allgemein plattenförmiges Element (14, 20) zu verteilen vermag, das das auftreffende Licht in die allgemeine Lichtabgaberichtung (X) auszurichten vermag,

**dadurch gekennzeichnet, dass** Verbindungselemente (22, 24) zwischen den ersten nebeneinanderliegenden Elementen (12) und zwischen den ersten Elementen (12) und dem zweiten Element (14) angeordnet sind, und dass das erste Element (12), das zweite Element (14) und die Verbindungselemente (22, 24) zusammen materialeinheitlich ausgebildet sind und eine optische Struktur aus einem einzigen Stück bilden.

2.  Signalleuchte nach Anspruch 1,
    **dadurch gekennzeichnet, dass** die optische Struktur ferner zwischen den Verbindungselementen (22) und den zweiten Elementen (14) Verbindungselemente (28) umfasst, die mit diesen einstückig ausgebildet sind.

3.  Signalleuchte nach Anspruch 1,
    **dadurch gekennzeichnet, dass** das zweite plattenförmige Element (14) entlang einem seiner Längsränder eine Versteifungsrippe (26) aufweist.

4.  Signalleuchte nach Anspruch 1,
    **dadurch gekennzeichnet, dass** die optische Struktur zwischen dem zweiten Element (14) und den ersten Elementen (12) oder den Verbindungselementen (22, 24) eine durchgehende Platte (32) aufweist, die mit diesen Elementen (12, 14, 22, 24) einstückig ausgebildet ist.

5.  Signalleuchte nach Anspruch 1,
    **dadurch gekennzeichnet, dass** die optische Struktur Elemente (34) zur Befestigung einer gedruckten Schaltung (36) aufweist.

6.  Signalleuchte nach Anspruch 5,
    **dadurch gekennzeichnet, dass** die gedruckte Schaltung (36) die Lichtquellen (10) trägt.

7.  Signalleuchte nach Anspruch 6,
    **dadurch gekennzeichnet, dass** die Lichtquellen (10) Leuchtdioden sind.

8.  Signalleuchte nach Anspruch 7,
    **dadurch gekennzeichnet, dass** die Lichtquellen im Wesentlichen aneinandergereiht sind.

9.  Signalleuchte nach Anspruch 5,
    **dadurch gekennzeichnet, dass** die optische Struktur Mittel (40, 44) zum Halten eines der gedruckten Schaltung (36) zugeordneten Verbinders (42) aufweist, wobei die Haltemittel mit der optischen Struktur einstückig ausgebildet sind.

10. Signalleuchte nach Anspruch 1,
    **dadurch gekennzeichnet, dass** die optische Struktur Mittel (46) zur Befestigung in einem Gehäuse aufweist, die mit der optischen Struktur einstückig ausgebildet sind.

11. Signalleuchte nach Anspruch 1,
    **dadurch gekennzeichnet, dass** das erste Element (12, 16, 18) das Licht unter Berücksichtigung der Veränderungen $(k_3(\theta))$ der Transmissionskoeffizienten des ersten (12) und des zweiten (14) Elements und der Leuchtdichte-Indi-katrix-Kurve $(k_2(\theta))$ der Lichtquelle (10) auf das zweite Element verteilt, um am Ausgang des zweiten Elements (14) eine Beleuchtungsstärke zu erhalten, die einem vorbestimmten Gesetz $(k_1(\theta))$ entspricht.

X  Z
Y

12  40  14  12  12  44  40  12

22  46

22  44  36  38  42

46

FIG.1

42  38  10  22  10  44  36  10  46

46  10  12  40  Z  Y  12  24

24  12  12  44  40  14  X

FIG.2

FIG.4

FIG.3

FIG.5

EP 1 184 618 B1

FIG.6

FIG.14

FIG.15

FIG.7

FIG.8

FIG.9

FIG.10

FIG.11

FIG.12

FIG.13

EP 1 184 618 B1

## RÉFÉRENCES CITÉES DANS LA DESCRIPTION

### Documents brevets cités dans la description

- FR 2614969 A
- FR 2776595 A
- US 4733335 A